# FASCICULE DE BREVET EUROPEEN

(11) **EP 3 983 652 B1**
(45) Date de publication et mention de la délivrance du brevet: **22.03.2023**
(21) Numéro de dépôt: 20742314.6
(22) Date de dépôt: 04.06.2020
(51) Int. Cl.: F01D 9/04, F01D 25/16

(54) **PIECE ANNULAIRE DE SUPPORT D'UN PALIER POUR UNE TURBOMACHINE**
RINGFÖRMIGES BAUTEIL ZUR LAGERUNG EINES TURBINENMOTORLAGERS
ANNULAR COMPONENT FOR SUPPORTING A TURBINE ENGINE BEARING

(30) Priorité: 12.06.2019 FR 1906249
(43) Date de publication de la demande: 20.04.2022
(73) Titulaire: Safran Helicopter Engines, 64510 Bordes (FR)
(72) Inventeur: JOSSE, Albert, 77550 MOISSY-CRAMAYEL (FR); VIVE, Loïs, Pierre, Denis, 77550 MOISSY-CRAMAYEL (FR); CASAUX-BIC, Jean-Maurice, 77550 MOISSY-CRAMAYEL (FR); LAMEIGNERE, Yvan, Ludovic, 77550 MOISSY-CRAMAYEL (FR)
(74) Mandataire: Gevers & Orès
(86) Numéro de dépôt international: PCT/FR2020/050953
(87) Numéro de publication internationale: WO 2020/249887

(56) Documents cités:
- DE-A1-102007 025 006
- FR-A1- 2 956 695
- FR-A1- 2 986 040
- FR-A1- 3 072 749

## Description

### Domaine technique de l'invention

Le domaine de la présente invention est celui des turbomachines aéronautiques et plus particulièrement celui de leurs pièces participant au support des paliers de leurs arbres.

### Arrière-plan technique

Les turbomachines aéronautiques, qu'elles soient mono- ou multi-corps, comportent généralement une ou plusieurs pièces annulaires structurales, dénommées aussi supports de paliers, qui soutiennent le ou les paliers sur lesquels tournent les arbres de rotation de ces corps. De telles pièces annulaires peuvent soutenir l'arbre de puissance entraîné par une turbine libre dans le cas d'une turbomachine. Ces pièces annulaires peuvent également assurer l'étanchéité entre les étages des turbines libre (TL) et à Haute Pression (HP).

Dans le cas des pièces annulaires de support pour le ou les paliers arrières, celles-ci sont soumises à des contraintes d'origine thermique relativement importantes. En effet, elles sont rattachées à une structure externe du moteur par une bride qui est située en zone froide ; alors que leur partie médiane, en forme de canal, est traversée par les gaz du moteur et est donc située dans une zone particulièrement chaude. Vers l'intérieur du moteur, les pièces annulaires sont rattachées à un ensemble de pièces formant une structure portant le ou les paliers de soutien des arbres dénommée « boitier palier ». Cette structure portant les paliers est elle aussi située dans une zone relativement froide qui est baignée par l'air de refroidissement du moteur et par l'huile de lubrification des paliers. Il convient donc de prendre en compte les déplacements radiaux différentiels susceptibles d'apparaître en fonctionnement du fait de ces écarts de température entre les diverses parties composant ces pièces annulaires de support de palier.

A cette fin, les pièces annulaires de support pour les paliers ont généralement la forme d'un conduit annulaire traversé par des bras radiaux et par lequel passent les gaz. Ces pièces sont prolongées vers l'extérieur et vers l'intérieur par deux viroles aux géométries complexes, dénommées « épingles ». Ces épingles permettent de relier la partie médiane rigide traversée par les gaz au boitier palier supportant les paliers du rotor à la structure extérieure de la turbomachine tout en autorisant les déplacements radiaux occasionnés par les écarts de température.

Dans l'état actuel, ces pièces annulaires présentent donc des viroles aux géométries complexes axisymétriques pour assurer une raideur de palier suffisante. Ces viroles peuvent comprendre des « lunules » (nommés également ouvertures) pour assurer le passage de servitudes, tels que des conduits d'huile qui traversent les bras radiaux conduisant à une non axisymétrie locale. Des exemples de réalisation de telles pièces annulaires pour accroître leurs durées de vie, sont décrites dans les demandes de brevets FR-A1-2 956 695 ou FR-A1-2 986 040. La première demande enseigne un élément souple permettant d'assurer une souplesse suffisante aux épingles du support du palier. La seconde demande quant à elle propose de disposer de façon particulière les bras tubulaires, en les inclinant en direction axiale et en direction tangentielle (par rapport à l'axe central du palier), pour obtenir une rigidité radiale et en flexion élevée.

Dans le cas particulier d'une architecture intégrant une pièce annulaire de support de palier présentant une architecture axisymétrique avec des lunules, des éléments d'étanchéité complémentaires sont intégrés pour assurer une étanchéité entre l'amont et l'aval de la pièce annulaire de support.

Ceci entraîne également une perte de performance de la turbomachine due à une étanchéité moins robuste et peu fiable. Par ailleurs, les éléments d'étanchéité rajoutent des contraintes d'encombrement et de conception de la pièce annulaire.

Un autre inconvénient de type de cette pièce annulaire est qu'il existe un champ de sollicitation quasi-axisymétrique au niveau des viroles axisymétriques de la pièce, même en présence des bras radiaux. Par conséquent, une propagation rapide de fissure à l'issue d'une phase d'amorçage par fatigue, peut conduire à la rupture la pièce annulaire et donc la perte de la tenue des éléments tournants du boitier palier.

Enfin, une pièce annulaire de support de palier est complexe à réaliser, notamment par la technique de fonderie, et elle a donc un coût de fabrication élevé. Par ailleurs, sa fiabilité mécanique en service peut également générer des surcoûts non négligeables, qui ont pour origine soit de nombreuses réparations soit une mise prématurée au rebut. De plus, cette pièce annulaire présente des contraintes d'assemblage (notamment par son emplanture axiale) avec les autres éléments de l'environnement (arbre, brides de fixation, conduits de servitudes, etc.).

Dans ce contexte, il est intéressant de pallier les inconvénients de l'art antérieur, en proposant une pièce annulaire de support de palier avec une résistance mécanique et une longévité optimisées, tout en permettant son assemblage simple et rapide dans une turbomachine.

### Résumé de l'invention

La présente invention a pour but de pallier un ou plusieurs inconvénients de l'art antérieur en proposant une solution qui est simple, efficace et économique.

L'invention propose ainsi une pièce annulaire de support de palier d'au moins un palier, pour une turbomachine, en particulier d'aéronef, comprenant :
- deux parois annulaires coaxiales, respectivement interne et externe, ces parois délimitant entre elles une veine d'écoulement de gaz et étant reliées entre elles par une rangée annulaire de bras ;
- une virole annulaire externe s'étendant autour de la paroi annulaire externe, cette virole comportant un bord périphérique interne relié à la paroi annulaire externe et un bord périphérique externe relié à une bride annulaire externe de fixation, dite « bride externe » ;
- une virole annulaire interne s'étendant à l'intérieur de la paroi annulaire interne, cette virole comportant un bord périphérique externe relié à la paroi annulaire interne et un bord périphérique interne comportant une bride annulaire interne de fixation, dite « bride interne » ;
la pièce annulaire étant caractérisée en ce qu'au moins l'une des viroles possède son bord périphérique externe ou interne relié à la paroi annulaire correspondante et a une forme générale ondulée autour d'un axe de la pièce annulaire.

Ainsi, cette solution permet d'atteindre l'objectif susmentionné. Grâce aux ondulations du bord de liaison d'au moins une des viroles, on peut réduire en particulier leurs dimensions, et/ou supprimer les lunules de passage de servitudes supprimant ainsi les pertes d'étanchéité en cas de suppression des lunules.

En effet, des ondulations peuvent facilement être conçues grâce à l'agencement spécifique et prédéterminé des composants non-axisymétriques de la pièce annulaire, tels que les bras pleins ou tubulaires, les viroles et les lunules qui permettent de former un chemin de passage de servitudes et autour desquels les ondulations peuvent être réalisées. Ainsi, il n'est pas forcément nécessaire d'utiliser des éléments d'étanchéité complémentaires pour compenser la perméabilité créée par les lunules et on peut réduire fortement l'encombrement de la pièce annulaire de support. Par ailleurs, les ondulations créent par nature une non-axisymétrie, notamment au niveau du bord de liaison d'au moins une des viroles, permettant d'entrainer un état de sollicitation thermomécanique localisé. Cet état de sollicitation est optimal pour concevoir cette pièce avec une robustesse par propagation lente d'une fissure à l'issue d'une phase d'amorçage par fatigue, de sorte à optimiser la durée de vie de la pièce annulaire de support et sa robustesse en service. A noter que cette configuration est également un moyen de limiter les contraintes d'assemblage axisymétrique citées ci-dessus, ce qui contribue également à renforcer la résistance mécanique et la longévité de la pièce annulaire de support.

Selon une autre particularité, une seule des viroles a son bord périphérique externe ou interne ondulé et relié à la paroi annulaire correspondante. Selon une autre particularité, l'autre des viroles a son bord périphérique externe ou interne relié à la paroi annulaire correspondante, ce bord périphérique externe ou interne a une forme générale circulaire autour de l'axe de la pièce ; cette virole comportant des ouvertures qui sont traversantes et qui sont alignées sensiblement circonférentiellement avec les bras.

Selon une autre variante, les viroles interne et externe ont chacune leur bord périphérique externe ou interne relié à la paroi annulaire correspondante, qui est ondulée.

Selon une autre particularité, les bras sont creux pour le passage de servitudes.

Selon une autre particularité, les parois annulaires comprennent chacune une rangée annulaire d'orifices qui sont traversants et qui débouchent dans les bras.

Selon une autre particularité, ledit bord périphérique circulaire de l'autre des viroles s'étend dans un plan perpendiculaire à l'axe et passant par les orifices de la paroi annulaire à laquelle ce bord est relié.

Selon une autre variante, ledit bord périphérique circulaire de l'autre des viroles s'étend dans un plan incliné par rapport à l'axe de la pièce annulaire et passant par les orifices de la paroi annulaire à laquelle ce bord est relié. Selon une autre particularité, le bord périphérique ondulé comprend des portions en creux et des portions en bosse, chaque portion en creux s'étendant autour d'un orifice de la paroi annulaire à laquelle ce bord est relié, et chaque portion en bosse s'étendant entre deux orifices adjacents de cette paroi.

Selon une autre particularité, les orifices de la paroi annulaire à laquelle le bord périphérique ondulé est relié, sont sous dimensionnés par rapport à ceux de l'autre paroi.

Selon une autre particularité, le bord périphérique ondulé forme des ondulations d'amplitude constante.

Selon une autre particularité, le bord périphérique ondulé forme des ondulations d'amplitude variable.

Dans cette configuration, l'amplitude et/ou la position angulaire des ondulations sont variables de sorte à apporter plus ou moins de non-axisymétrie sur le bord de liaison d'au moins une des viroles pour ainsi réduire l'état de sollicitation thermomécanique et renforcer la tenue mécanique de la pièce annulaire ou encore ajuster la raideur de l'ensemble support de palier.

Selon une autre particularité, l'amplitude maximale de l'ondulation est comprise entre 10% et 90%, et plus particulièrement entre 15% et 20% (virole externe ondulé) ou entre 70% et 90% (virole interne ondulé), par rapport à une longueur totale des bras mesurée suivant l'axe de la pièce annulaire.

L'amplitude du bord ondulé est par exemple choisie en fonction de plusieurs paramètres liés à l'environnement de la turbomachine, tels que : la position et le sens des viroles (interne ou externe) de la pièce, la longueur des bras, la position de la bride de fixation externe et/ou du type de turbomachine ou encore les niveaux de sollicitation thermomécanique et raideur du support palier.

L'invention propose également une turbomachine d'aéronef comprenant au moins une pièce annulaire de support d'au moins un palier selon une des particularités de l'invention.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une demi vue schématique en coupe axiale d'une partie d'une turbomachine dans laquelle est agencée une pièce annulaire de support d'au moins un palier, selon un premier mode de réalisation de l'invention ;
[Fig.2] la figure 2 est une vue schématique en perspective de la pièce annulaire représentée sur la figure 1 ;
[Fig.3] la figure 3 est une demi vue schématique en coupe axiale de la pièce annulaire des figures 1 et 2 ;
[Fig.4] la figure 4 est une vue schématique en perspective d'une pièce annulaire de support selon un second mode de réalisation de l'invention ;
[Fig.5] la figure 5 est une vue schématique de côté de la pièce annulaire de la figure 4.

### Description détaillée de l'invention

Par convention dans la présente demande, les termes « intérieur » et « extérieur », et « interne » et « externe » sont utilisés en référence à un positionnement par rapport à un axe X-X de rotation d'une turbomachine. Ainsi, un cylindre s'étendant selon l'axe X-X du moteur comporte une face intérieure tournée vers l'axe du moteur et une surface extérieure, opposée à sa surface intérieure. On entend par « longitudinal » ou « longitudinalement » toute direction parallèle à l'axe X-X, et par « transversalement » ou « transversal » toute direction perpendiculaire à l'axe X-X. De même, les termes « amont » et « aval » sont définis par rapport au sens de circulation de l'air dans la turbomachine.

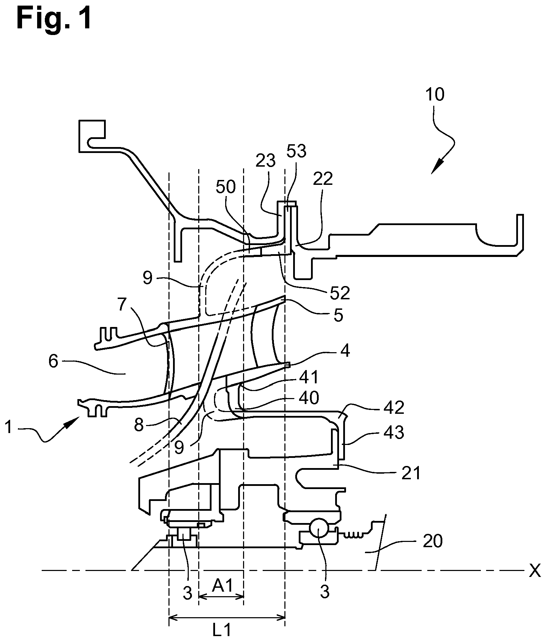

Sur la figure 1 est illustrée une partie d'une turbomachine 10, telle qu'un turbomoteur d'aéronef, comportant une pièce annulaire de support 1 de paliers 3 de l'invention, permettant de guider un arbre 20 entraîné par une turbine disposée en aval de cette pièce annulaire 1. Les gaz, provenant d'un générateur de gaz (non représenté), passent dans une veine 6 d'écoulement de cette pièce 1.

La pièce 1 est reliée, d'une part, à un ensemble d'éléments 22, 23 d'une structure externe de la turbomachine 10, et d'autre part, à une structure interne 21 portant les paliers 3 de la turbomachine 10. En aval de cette pièce 1, les gaz traversent, par exemple un distributeur de turbine libre puis une roue de turbine libre à laquelle ils transmettent leur énergie (non représentés). Cette roue de turbine libre est notamment reliée mécaniquement à l'arbre 20 qui est guidé par les paliers 3 et qui récupère la puissance de la turbomachine. Ces paliers 3 sont portés par la structure interne 21 qui est reliée à la pièce 1 de l'invention.

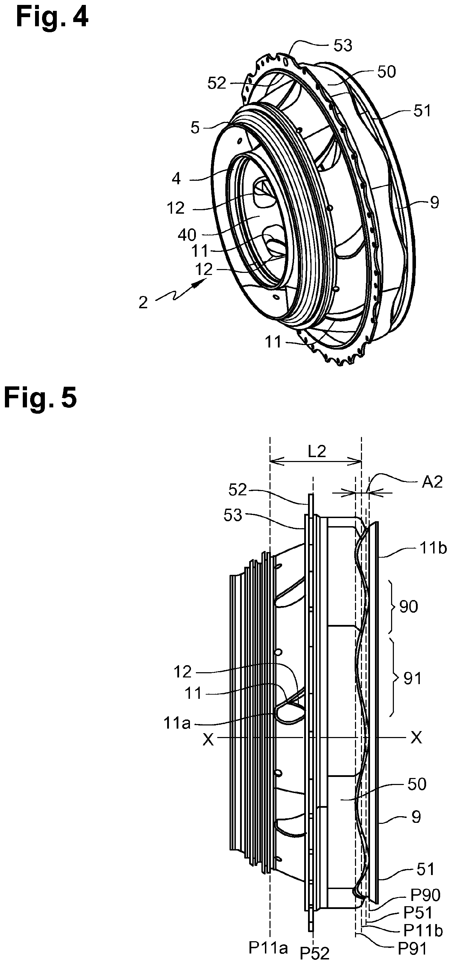

Les figures 1 à 3 illustrent un premier mode de réalisation de la pièce 1 et les figures 4 à 5 illustrent un second mode de réalisation de cette pièce 2. Selon le premier mode de réalisation, la pièce 1 a une forme de révolution s'étendant autour d'un axe qui est confondu avec l'axe X-X de la turbomachine.

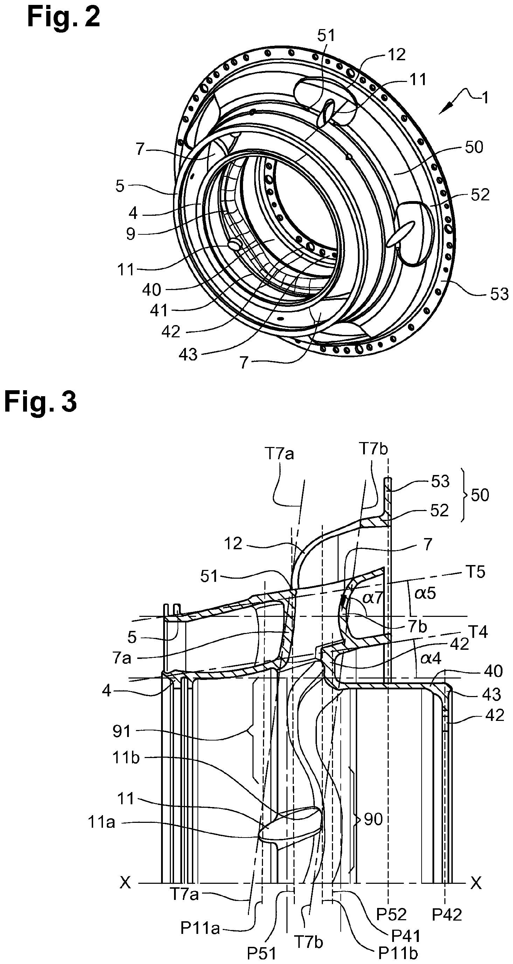

En référence à la figure 2, la pièce 1 comprend deux parois annulaires, respectivement interne 4 et externe 5, qui sont reliées entre elles par des bras 7. Ces bras 7 peuvent être pleins ou tubulaires (ou dit autrement creux) par exemple pour le passage de servitudes 8. Cette pièce 1 comprend en outre une virole annulaire interne 40 s'étendant radialement à l'intérieur de la paroi annulaire interne 4 et une virole annulaire externe 50 qui s'étend autour de la paroi annulaire externe 5.

La virole annulaire interne 40 comprend un bord périphérique externe 41 relié à la paroi annulaire interne 4 et un bord périphérique interne 42 comportant une bride interne de fixation 43. Cette bride interne 43 peut être liée par des moyens de fixation (tels que des boulons) à une bride de la structure interne 21 de la turbomachine 10, comme illustrée par exemple sur la figure 1.

La virole annulaire externe 50 comprend un bord périphérique interne 51 relié à la paroi annulaire externe 5 et un bord périphérique externe 52 comportant une bride externe de fixation 53. Cette bride externe 53 peut être également liée par des moyens de fixation (tels que des boulons) à des brides de la structure externe 22, 23 de la turbomachine 10, comme illustré à la figure 1. Dans l'exemple représenté, le bord externe 41 relié à la paroi interne 4 comprend des ondulations 9 disposées autour de l'axe X-X, alors que le bord interne 51 relié à la paroi externe 5 a une forme générale circulaire.

La virole externe 50 comprend des ouvertures 12 (ou « lunules » comme mentionné ci-dessus) qui sont traversantes et qui sont alignées sensiblement radialement avec les bras 7.

Les parois 4, 5 comprennent des orifices 11 qui sont également traversants et qui débouchent dans les bras 7. Les bras 7, les ouvertures 12 et les orifices 11 sont au moins partiellement alignés sensiblement radialement entre eux, par exemple pour permettre le passage de servitudes 8, comme illustré par exemple sur la figure 1. De façon non-limitative, les orifices 11 sont dimensionnés de façon à avoir une surface sensiblement plus petite que celle des orifices 12. Les dimensions des orifices 11 et des ouvertures 12 sont par exemple choisies en fonction de la dimension générale de la pièce 1 du support de palier, de la vitesse de rotation de l'arbre 20, du besoin en passage de servitudes 8, des niveaux de sollicitation mécanique, notamment pour les ouvertures et du type de turbomachine 10.

En référence à la figure 3, les éléments composant la pièce 1 sont décrits de façon détaillée par rapport, d'une part, à plusieurs plans perpendiculaires P à l'axe X-X et parallèles entre eux, et d'autre part, à plusieurs plans tangents T qui sont obliques à l'axe X-X et forment des angles d'inclinaison α.

Les parois interne 4 et externe 5 s'étendent, chacune suivant un plan tangent, respectivement plan T4 et plan T5. La paroi interne 4 est donc inclinée en direction oblique par rapport à l'axe X-X en formant un angle d'inclinaison α4, et la paroi externe 5 est inclinée en direction oblique par rapport à l'axe X-X en formant un angle d'inclinaison α5.

Chaque bras 7 s'étend radialement entre les parois interne 4 et externe 5 et il peut être incliné en direction oblique par rapport à l'axe X-X en formant un angle d'inclinaison α7. Le bras 7 comprend une cavité interne délimitée par une paroi 7a située à l'amont pour former un bord d'attaque du bras et passant par un plan tangent T7a, et une paroi 7b située à l'aval pour former un bord de fuite et passant par un plan tangent T7b parallèle au plan T7a. La virole interne 40 s'étend sensiblement axialement et comprend en amont le bord externe 41 qui passe par un plan P41, et d'autre part en aval le bord interne 42 qui passe par un plan P42. Cette virole interne 40 s'étend sensiblement radialement, d'une part, vers l'extérieur par le plan P41 du bord externe 41 reliant la paroi interne 4, et d'autre part, vers l'intérieur par le plan P42 qui comprend la bride interne 43. En coupe axiale, la virole interne 40 reliée à la paroi interne 4 comprend une forme incurvée avec une concavité dirigée vers l'aval.

La virole externe 50 s'étend sensiblement axialement et comprend en amont le bord interne 51 passant par un plan P51, et d'autre part en aval le bord externe 52 passant par un plan P52. Cette virole externe 50 s'étend sensiblement radialement vers l'extérieur par le plan P52 qui comprend la bride externe 53. En coupe axiale, la virole externe reliée à la paroi externe 5 comprend une forme incurvée en demi-arc avec une concavité dirigée vers l'aval. Le plan P41 de la virole interne 40 reliée à la paroi interne 4 est disposé entre les plans P51 et P52 de la virole externe 50, et le plan P42 du bord interne 42 de la virole interne 40 est disposé en aval du plan P52 de la virole externe 50.

Dans l'exemple représenté, l'orifice 11 a une forme générale allongée qui s'étend entre une extrémité amont 11a passant sensiblement par le plan T7a et une extrémité aval 11b passant sensiblement par le plan T7b, de façon à ce que cet orifice de la paroi interne 4 débouche dans la cavité interne du bras 7. De même, l'ouverture 12 s'étend également d'amont en aval entre les plans tangents T7a et T7b, de façon à ce que cette ouverture de la paroi externe 5 débouche dans la cavité interne du bras 7.

En particulier, le plan P41 de la virole interne 40 reliée à la paroi interne 4 est disposé entre les plans T7a et T7b du bras 7, et plus près du plan T7b de la paroi 7b que du plan T7a de la paroi 7a. Le bord externe 41 de la virole interne 4 qui passe par ce plan 41, obture donc partiellement la cavité interne du bras 7 et l'extrémité aval 11b de l'orifice. Le plan P51 de la virole externe 50 reliée à la paroi externe 5 est quasiment joignant avec le plan T7a de la paroi 7a du bras par le bord interne 51.

Le bord ondulé 41 comprend des portions en creux 90 et des portions en bosse 91 de manière alternées pour former des ondulations 9 entre les plans P41 et P51. Chaque portion en creux 90 est disposée autour d'un orifice 11, de préférence autour de l'extrémité aval 11b et passant sensiblement par un plan P11b. La portion en bosse 91 est disposée entre deux orifices 11 adjacents.

Avantageusement, les ondulations 9 comprennent une amplitude A1 sensiblement similaire à une longueur totale L1 du bras 7 mesurée suivant l'axe X-X (figure 1). Cette amplitude A1 peut être constante ou variable en fonction de la taille et/ou de la position, respectivement similaire ou différente, des bras 7. Sur les figures 1 et 2, les bras 7, au nombre de cinq, sont sensiblement de même taille et disposés à équidistance les uns des autres, de sorte que les ondulations 9 présentent une amplitude constante autour de l'axe X-X. La pièce annulaire 1 peut comprendre plus ou moins de cinq bras selon le besoin fonctionnel de cette pièce dans la turbomachine. Les figures 4 et 5 illustrent le second mode de réalisation. La pièce 2 se distingue de la pièce 1 par le bord externe 41 relié à la paroi annulaire 4 qui a une forme générale circulaire, alors que le bord interne 51 comprend des ondulations 9 disposées autour l'axe X-X. Ce bord ondulé 51 s'étend dans un plan P51 en aval de la pièce 2 et perpendiculaire à l'axe X-X, et le bord externe 52 s'étend dans un plan P52 en amont qui est parallèle à P51. La virole interne 40 comprend des ouvertures 12 qui sont traversantes et qui sont alignées sensiblement radialement avec les bras 7. Les parois annulaires 4, 5 comprennent des orifices 11 qui sont également traversants et qui débouchent dans les bras 7. Les bras 7, les ouvertures 12 et les orifices 11 sont également alignés au moins partiellement de façon radiale entre eux pour permettre le passage de servitudes 8. Les ouvertures 12 ont une forme et des dimensions différentes de celle des orifices 11.

Les orifices 11 de la paroi annulaire externe 5 sont de forme allongée similaire à une aile d'avion ayant un bord d'attaque qui est l'avant du profil d'écoulement d'air et un bord de fuite qui est l'arrière du profil d'écoulement d'air. Ainsi de façon comparable, l'orifice 11 comprend une extrémité en amont 11a passant par un plan P11a perpendiculaire à l'axe X-X et formant un bord d'attaque, et une extrémité aval 11b passant par un plan P11b perpendiculaire à l'axe X-X et formant un bord de fuite. L'extrémité aval 11b est plus petite et également décalée axialement et radialement par rapport à l'extrémité amont 11a de l'orifice. Ainsi, l'extrémité amont 11a de l'orifice est suffisamment grande pour permettre le passage de servitude 8, alors que l'extrémité aval 11b de l'orifice est proche du bord 51 relié à la paroi externe 5 pour permettre la formation des ondulations 9.

En particulier, les ondulations 9 comprennent également des portions en creux 90 et des portions en bosse 91. Chaque portion en creux 90 comprend un creux passant par un plan P90 et situé proche de l'extrémité aval 11b de l'orifice, de sorte à contourner cet orifice. Chaque portion en bosse 91 comprend un sommet passant par un plan P91 et situé sensiblement entre deux extrémités aval 11b de deux orifices adjacents.

Avantageusement, les ondulations 9 comprennent une amplitude A2 comprise entre 15% et 20%, par rapport à une longueur totale L2 du bras 7 mesurée suivant l'axe X-X. Cette amplitude A2 des ondulations 9 peut être constante ou variable en fonction du dimensionnement, respectivement similaire ou différente, des bras 7. Sur les figures 4 et 5, les bras 7 sont sensiblement de même taille et disposés à équidistance les uns des autres, de sorte que les ondulations 10 présentent une amplitude constante autour de l'axe X-X de la pièce.

Dans ces deux modes de réalisation, les ondulations du bord de liaison d'au moins une des viroles, permettent de créer une non-axisymétrie pour compenser le champ de sollicitation quasi-axisymétrique au niveau de cette virole, tout en renforçant l'étanchéité de la pièce.

Les pièces annulaires 1, 2 de l'invention peuvent être réalisées par fonderie ou par fabrication additive. A noter que la création des ondulations sur la pièce annulaire n'introduit pas de problématique majeure de fabrication. Par exemple, le procédé de fonderie permet de réaliser les ondulations sans introduire de surcoût rédhibitoire en série.

Les pièces annulaires de support des paliers de l'invention apportent plusieurs avantages par rapport à la technique antérieure, notamment de :
- renforcer l'étanchéité en supprimant les ouvertures au niveau des viroles de la pièce annulaire de support ;
- maintenir de façon fiable et stable les paliers des arbres de la turbomachine ;
- assurer le passage de servitudes de façon efficace, par exemple pour les roulements des éléments tournants de la structure interne portant les paliers ;
- garantir le confinement des contraintes dans les viroles afin de limiter la propagation d'une fissure lors de phase d'amorçage par fatigue ;
- garantir une tenue mécanique sous sollicitation thermomécanique ou en positionnement vibratoire dans les conditions du moteur en fonctionnement ;
- s'adapter facilement aux paliers actuels.

De manière générale, la pièce annulaire de support de palier avec les ondulations du bord de liaison d'au moins une des viroles, permet d'améliorer les performances du moteur et limiter les perturbations aérodynamiques dans la veine d'écoulement de gaz de la turbomachine. Les solutions proposées sont simples, efficaces et économiques à réaliser et à assembler sur une turbomachine, tout en assurant une résistance mécanique et une durée de vie optimales de la pièce annulaire de support des paliers.

## Revendications

1. Pièce annulaire (1, 2) de support d'au moins un palier (3), pour une turbomachine (10), en particulier d'aéronef, comprenant :
- deux parois annulaires coaxiales, respectivement interne (4) et externe (5), ces parois délimitant entre elles une veine annulaire d'écoulement de gaz (6) et étant reliées entre elles par une rangée annulaire de bras (7) ;
- une virole annulaire externe (50) s'étendant autour de la paroi annulaire externe (5), cette virole comportant un bord périphérique interne (51) relié à la paroi annulaire externe (5) et un bord périphérique externe (52) relié à une bride annulaire de fixation, dite « bride externe » (53) ;
- une virole annulaire interne (40) s'étendant à l'intérieur de la paroi annulaire interne (4), cette virole comportant un bord périphérique externe (41) relié à la paroi annulaire interne (4) et un bord périphérique interne (42) comportant une bride annulaire de fixation, dite « bride interne » (43) ;
la pièce annulaire (1, 2) étant **caractérisée en ce qu'**au moins l'une des viroles (40, 50) possède son bord périphérique externe ou interne (41, 51) qui est relié à la paroi annulaire correspondante (4, 5) et qui a une forme générale ondulée autour d'un axe (X-X) de la pièce annulaire (1, 2).

2. Pièce annulaire selon la revendication 1, **caractérisée en ce qu'**une seule des viroles (40, 50) a son bord périphérique externe ou interne (41, 51) ondulé et relié à la paroi annulaire (4, 5) correspondante.

3. Pièce annulaire selon la revendication 2, **caractérisée en ce que** l'autre des viroles (40, 50) a son bord périphérique externe ou interne relié à la paroi annulaire (4, 5) correspondante, ce bord périphérique externe ou interne a une forme générale circulaire autour de l'axe (X-X) de la pièce, cette virole comportant des ouvertures (12) qui sont traversantes et qui sont alignées sensiblement circonférentiellement avec les bras (7).

4. Pièce annulaire selon la revendication 1, **caractérisée en ce que** les viroles interne (40) et externe (50) ont chacune leur bord périphérique externe ou interne (41, 51) relié à la paroi annulaire (4, 5) correspondante, qui est ondulée.

5. Pièce annulaire selon une des revendications 1 à 4, **caractérisée en ce que** les bras (7) sont creux pour le passage de servitudes (8).

6. Pièce annulaire selon une des revendications 1 à 5, **caractérisée en ce que** les parois annulaires (4, 5) comprennent chacune une rangée annulaire d'orifices (11) qui sont traversants et qui débouchent dans les bras (7).

7. Pièce annulaire selon l'ensemble des revendications 3 et 6, **caractérisée en ce que** ledit bord périphérique (41, 51) circulaire de l'autre des viroles (40, 50) s'étend dans un plan perpendiculaire à l'axe (X-X) et passant par les orifices (11) de la paroi annulaire (4, 5) à laquelle ce bord est relié.

8. Pièce annulaire selon l'ensemble des revendications 3 et 6, **caractérisée en ce que** ledit bord périphérique (41, 51) circulaire de l'autre des viroles (40, 50) s'étend dans un plan incliné par rapport à l'axe (X-X) de la pièce annulaire et passant par les orifices (11) de la paroi annulaire (4, 5) à laquelle ce bord est relié.

9. Pièce annulaire selon une des revendications 6 à 8, **caractérisée en ce que** le bord périphérique (41, 51) ondulé comprend des portions en creux (90) et des portions en bosse (91), chaque portion en creux (90) s'étendant autour d'un orifice (11) de la paroi annulaire à laquelle ce bord est relié, et chaque portion en bosse (91) s'étendant entre deux orifices (11) adjacents de cette paroi.

10. Pièce annulaire selon une des revendications 1 à 9, **caractérisée en ce que** le bord périphérique (41, 51) ondulé forme des ondulations (9) d'amplitude constante.

11. Pièce annulaire selon une des revendications 1 à 9, **caractérisée en ce que** le bord périphérique (41, 51) ondulé forme des ondulations (9) d'amplitude variable.

12. Pièce annulaire selon une des revendications 1 à 11, **caractérisée en ce que** l'amplitude maximale de l'ondulation (9) est comprise entre 10% et 90%.

13. Turbomachine, en particulier d'aéronef, comprenant au moins une pièce annulaire (1, 2) selon l'une des revendications 1 à 12.

## Patentansprüche

1. Ringförmiges Bauteil (1, 2) zur Lagerung mindestens eines Lagers (3) für eine Turbomaschine (10), insbesondere Luftfahrzeug, umfassend:
- zwei ringförmige koaxiale Wände, eine innere (4) bzw. eine äußere (5), wobei diese Wände untereinander eine ringförmige Gasströmungsader (6) begrenzen und durch eine ringförmige Reihe von Armen (7) untereinander verbunden sind;
- eine ringförmige äußere Halterung (50), die sich um die ringförmige äußere Wand (5) herum erstreckt, wobei diese Halterung einen inneren Umfangsrand (51), der mit der ringförmigen äußeren Wand (5) verbunden ist, und einen äußeren Umfangsrand (52) umfasst, der mit einem ringförmigen Befestigungsflansch, als "äußerer Flansch" (53) bezeichnet, verbunden ist;
- eine ringförmige innere Halterung (40), die sich im Inneren der ringförmigen inneren Wand (4) erstreckt, wobei diese Halterung einen äußeren Umfangsrand (41), der mit der ringförmigen inneren Wand (4) verbunden ist, und einen inneren Umfangsrand (42) umfasst, der einen ringförmigen Befestigungsflansch, als "innerer Flansch" (43) bezeichnet, umfasst;
wobei das ringförmige Bauteil (1, 2) **dadurch gekennzeichnet ist, dass** mindestens eine der Halterungen (40, 50) ihren äußeren oder inneren Umfangsrand (41, 51) besitzt, der mit der entsprechenden ringförmigen Wand (4, 5) verbunden ist und der eine allgemeine gewellte Form um eine Achse (X-X) des ringförmigen Bauteils (1, 2) herum aufweist.

2. Ringförmiges Bauteil nach Anspruch 1, **dadurch gekennzeichnet, dass** eine einzige der Halterungen (40, 50) ihren äußeren oder inneren Umfangsrand (41, 51) gewellt und mit der entsprechenden ringförmigen Wand (4, 5) verbunden aufweist.

3. Ringförmiges Bauteil nach Anspruch 2, **dadurch gekennzeichnet, dass** die andere der Halterungen (40, 50) ihren äußeren oder inneren Umfangsrand (41, 51) mit der entsprechenden ringförmigen Wand (4, 5) verbunden aufweist, dieser äußere oder innere Umfangsrand eine allgemeine kreisförmige Form um die Achse (X-X) des Bauteils herum aufweist, wobei diese Halterung Aussparungen (12) umfasst, die durchgehend sind und die im Wesentlichen umlaufend mit den Armen (7) ausgerichtet sind.

4. Ringförmiges Bauteil nach Anspruch 1, **dadurch gekennzeichnet, dass** die innere (40) und äußere (50) Halterung jeweils ihren äußeren oder inneren Umfangsrand (41, 51) mit der entsprechenden ringförmigen Wand (4, 5), die gewellt ist, verbunden aufweisen.

5. Ringförmiges Bauteil nach einem der Ansprüche 1 bis 4, **dadurch gekennzeichnet, dass** die Arme (7) für den Durchgang von Leistung (8) hohl sind.

6. Ringförmiges Bauteil nach einem der Ansprüche 1 bis 5, **dadurch gekennzeichnet, dass** die ringförmigen Wände (4, 5) jeweils eine ringförmige Reihe von Öffnungen (11) umfassen, die durchgehend sind und die in die Arme (7) münden.

7. Ringförmiges Bauteil nach der Gesamtheit der Ansprüche 3 und 6, **dadurch gekennzeichnet, dass** sich der kreisförmige Umfangsrand (41, 51) der anderen der Halterungen (40, 50) in einer Ebene erstreckt, die senkrecht zur Achse (X-X) ist und durch die Öffnungen (11) der ringförmigen Wand (4, 5) verläuft, mit der dieser Rand verbunden ist.

8. Ringförmiges Bauteil nach der Gesamtheit der Ansprüche 3 und 6, **dadurch gekennzeichnet, dass** sich der kreisförmige Umfangsrand (41, 51) der anderen der Halterungen (40, 50) in einer Ebene erstreckt, die in Bezug auf die Achse (X-X) des ringförmigen Bauteils geneigt ist und durch die Öffnungen (11) der ringförmigen Wand (4, 5) verläuft, mit der dieser Rand verbunden ist.

9. Ringförmiges Bauteil nach einem der Ansprüche 6 bis 8, **dadurch gekennzeichnet, dass** der gewellte Umfangsrand (41, 51) ausgehöhlte Abschnitte (90) und angehobene Abschnitte (91) umfasst, wobei sich jeder ausgehöhlte Abschnitt (90) um eine Öffnung (11) der ringförmigen Wand herum erstreckt, mit der dieser Rand verbunden ist, und wobei sich jeder angehobene Abschnitt (91) zwischen zwei benachbarten Öffnungen (11) dieser Wand erstreckt.

10. Ringförmiges Bauteil nach einem der Ansprüche 1 bis 9, **dadurch gekennzeichnet, dass** der gewellte Umfangsrand (41, 51) Wellen (9) mit konstanter Amplitude bildet.

11. Ringförmiges Bauteil nach einem der Ansprüche 1 bis 9, **dadurch gekennzeichnet, dass** der gewellte Umfangsrand (41, 51) Wellen (9) mit variabler Amplitude bildet.

12. Ringförmiges Bauteil nach einem der Ansprüche 1 bis 11, **dadurch gekennzeichnet, dass** die maximale Amplitude der Welle (9) zwischen 10% und 90% beträgt.

13. Turbomaschine, insbesondere eines Luftfahrzeugs, umfassend mindestens ein ringförmiges Bauteil (1, 2) nach einem der Ansprüche 1 bis 12.

## Claims

1. An annular component (1, 2) of supporting at least one bearing (3), for a turbine engine (10), in particular for an aircraft, comprising:
- two coaxial annular walls, internal (4) and external (5) respectively, these walls delimiting between them an annular gas flow vein (6) and being connected together by an annular row of arms (7);
- an external annular shell (50) extending around the external annular wall (5), this shell comprising an internal peripheral edge (51) connected to the external annular wall (5) and an external peripheral edge (52) connected to an annular fixing flange, referred to as "external flange" (53);
- an internal annular shell (40) extending inside the internal annular wall (4), this shell comprising an external peripheral edge (41) connected to the internal annular wall (4) and an internal peripheral edge (42) comprising an annular fixing flange, referred to as the "internal flange" (43);
the annular component (1, 2) being **characterised in that** at least one of the shells (40, 50) has its external or internal peripheral edge (41, 51) which is connected to the corresponding annular wall (4, 5) and which has a generally corrugated shape around an axis (X-X) of the annular component (1, 2).

2. The annular component according to claim 1, **characterised in that** only one of the shells (40, 50) has its external or internal peripheral edge (41, 51) corrugated and connected to the corresponding annular wall (4, 5).

3. The annular component according to claim 2, **characterised in that** the other of the shells (40, 50) has its external or internal peripheral edge connected to the corresponding annular wall (4, 5), this external or internal peripheral edge has a generally circular shape around the axis (X-X) of the component, this shell having openings (12) which are through openings and which are aligned substantially circumferentially with the arms (7).

4. The annular component according to claim 1, **characterised in that** the internal (40) and external (50) shells each have their external or internal peripheral edge (41, 51) connected to the corresponding annular wall (4, 5), which is corrugated.

5. The annular component according to any of claims 1 to 4, **characterised in that** the arms (7) are hollow for the passage of auxiliaries (8).

6. The annular component according to one of claims 1 to 5, **characterised in that** the annular walls (4, 5) each comprise an annular row of holes (11) which are through holes and which open into the arms (7).

7. The annular component according to all of claims 3 and 6, **characterised in that** said circular peripheral edge (41, 51) of the other of the shells (40, 50) extends in a plane perpendicular to the axis (X-X) and passing through the holes (11) of the annular wall (4, 5) to which this edge is connected.

8. The annular component according to all of claims 3 and 6, **characterised in that** said circular peripheral edge (41, 51) of the other of the shells (40, 50) extends in a plane inclined with respect to the axis (X-X) of the annular component and passing through the holes (11) of the annular wall (4, 5) to which this edge is connected.

9. The annular component according to one of claims 6 to 8, **characterised in that** the corrugated peripheral edge (41, 51) comprises hollow portions (90) and hump portions (91), each hollow portion (90) extending around a hole (11) of the annular wall to which that edge is connected, and each hump portion (91) extending between two adjacent holes (11) of that wall.

10. The annular component according to any of claims 1 to 9, **characterised in that** the corrugated peripheral edge (41, 51) forms corrugations (9) of constant amplitude.

11. The annular component according to one of claims 1 to 9, **characterised in that** the corrugated peripheral edge (41, 51) forms corrugations (9) of variable amplitude.

12. The annular component according to one of claims 1 to 11, **characterised in that** the maximum amplitude of the corrugation (9) is between 10% and 90%.

13. A turbine engine, in particular for an aircraft turbine engine, comprising at least one annular component (1, 2) according to any of claims 1 to 12.
